# EUROPÄISCHE PATENTANMELDUNG

(11) **EP 2 181 607 A1**
(43) Veröffentlichungstag der Anmeldung: **05.05.2010**
(21) Anmeldenummer: 09012627.7
(22) Anmeldetag: 06.10.2009
(51) Int. Cl.: A23G 1/04, A23G 1/20, A23G 3/02, A23G 3/00, A23G 1/00

(54) **Vorrichtung zum Dosieren von Süßwarenmassen**

(30) Priorität: 04.11.2008 DE 102008055814
(71) Anmelder: Hosokawa Bepex GmbH, 74211 Leingarten (DE)
(72) Erfinder: Vongeheur, Hermann-Otto, 56567 Neuwied (DE)
(74) Vertreter: Thum, Bernhard

(57) **Zusammenfassung**

Die Erfindung betrifft eine Vorrichtung (10) und ein Verfahren zum Dosieren von zu Rekristallisation neigender Süßwarenmassen mit
- wenigstens einer Massezuführöffnung (14) zum kontinuierlichen Zuführen der Süßwarenmasse,
- wenigstens einer Masseabgabeöffnung (16) zum dosierten Abgeben der Süßwarenmasse,
- wenigstens einem Dosierkolben (20), der mit seiner ersten Kolbenfläche (24) einen Dosierraum (28) begrenzt und in diesem reziprozierend derart bewegbar ist, dass er wechselweise Süßwarenmasse von der Massezuführöffnung (14) in den Dosierraum (28) saugt oder aus diesem zur Masseabgabeöffnung (16) ausstößt,
- wenigstens einem Ventil, das zum dosierten Abgeben der Süßwarenmasse aus dem Dosierraum über die Masseabgabeöffnung (16) in eine Offenstellung und eine Schließstellung schaltbar ist.

Zur Vermeidung von Rekristallisation ist erfindungsgemäß vorgesehen, dass der Dosierkolben (20) und das Ventil (20) jeweils dichtungslos mit Spiel an ihren jeweiligen Mantelflächen geführt werden und während ihrer reziprozierenden Bewegung mit ihren Mantelflächen zumindest abschnittsweise wiederholt in den Strom zugeführter Süßwarenmasse hineinbewegbar sind.

## Beschreibung

Die vorliegende Erfindung betrifft eine Vorrichtung zum Dosieren von zu Rekristallisation neigender Süßwarenmassen.

Bei der Dosierung von zu Rekristallisation neigender Zuckerlösungen, wie beispielsweise Hartbonbonmassen oder Fondantmassen oder anderen vorkristallisierten Massen, werden in der Regel über eine separate Pumpe (Speisepumpe) entsprechende Süßwarenmassen einer Dosiervorrichtung zugeführt. Während man die Pumpe kontinuierlich betreiben muss, und so eine kontinuierliche Zufuhr von Süßwarenmassen zu der Dosiervorrichtung erfolgt, erfolgt die tatsächliche Dosierung, beispielsweise in einzelne Formen oder dergleichen, in der Regel über ein Kolbensystem diskontinuierlich. Aus diesem Grunde muss bei kontinuierlicher Süßwarenmassezufuhr Süßwarenmasse zwischengespeichert ("gepuffert") werden oder zurückgeführt werden, nämlich dann, wenn die Süßwarenmassenabgabe über die einzelnen Düsen oder Mundstücke unterbrochen ist. Zur Vermeidung von Rekristallisation oder erhöhtem Abrieb werden die Kolben und Kolbenbohrungen mit einer großen Toleranz gefertigt und für ausreichend Umspülung mit immer frischer Masse gesorgt. Da dies bei einem Schieber nicht möglich ist, wird darauf ganz verzichtet oder durch Freifräsungen die Reibfläche so klein wie möglich gehalten. Trotzdem führen diese Freiräume (Hohlräume) zu Kristallbildung und müssen nach kurzer Zeit gereinigt werden. Eine Alternative sind integrierte Rückschlagventile, die den Nachteil der Gewichtsschwankung mit sich bringen und damit eine reproduzierbare Gewichtsverteilung nicht garantieren.

Das Dokument DE 10 2005 004 785 A1 betrifft eine Vorrichtung zum Dosieren von Süßwarenmassen, bei der mittels eines Hub-/Drehkolbens Süßwarenmasse aus einem Trichter in eine Kammer und aus dieser über einen Gießkanal verpresst werden kann. Wenngleich diese Vorrichtung Vorteile hinsichtlich der Hygiene bietet, hat sie den Nachteil einer diskontinuierlichen Massezufuhr. Darüber hinaus kommt es an der Umfangsfläche der Hub-/Drehkombikolben zu Rekristallisation.

Das Dokument DE 32 33 364 A1 zeigt eine Vorrichtung zur volumetrischen Dosierung von Lebensmittelmassen, die mit Membranen ausgeführt ist. Diese Vorrichtung unterliegt dem Problem einer aufwändigen Reinigung. Darüber hinaus kommt es auch bei dieser Vorrichtung am Außenumfang des Dosierkolbens zu Rekristallisationseffekten.

Das Dokument DE 24 38 796 C2 zeigt eine Vorrichtung zum portionsweisen Abfüllen von flüssigem oder pastösem Füllgut mit diskontinuierlicher Füllgutdosierung.

Als allgemeiner Stand der Technik wird zusätzlich auf das Fachbuch "Food and Bioprocess Engineering - Diary Technology" von H. G. Kessler, Verlag A. Kessler, München, 2002, Seite 371 bis 373 verwiesen, wo allgemein auf das Dosieren von flüssigen oder pastösen Stoffen eingegangen wird.

Es ist eine Aufgabe der vorliegenden Erfindung, eine Vorrichtung der eingangs bezeichneten Art bereitzustellen, bei der unter verhältnismäßig geringem technischem Aufwand bei guter Reinigungsmöglichkeit die vorstehend geschilderten Probleme aus dem Stand der Technik hinsichtlich einer Rekristallisation und des gewichtsgenauen Gießens der verarbeiteten Süßwarenmasse nicht bestehen.

Diese Aufgabe wird durch eine Vorrichtung zum Dosieren von Süßwarenmassen mit den Merkmalen des Anspruchs 1 gelöst. Diese Vorrichtung ist ausgebildet mit
- wenigstens einer Massezuführöffnung zum kontinuierlichen Zuführen der Süßwarenmasse,
- wenigstens einer Masseabgabeöffnung zum dosierten Abgeben der Süßwarenmasse,
- wenigstens einem Dosierkolben, der mit seiner ersten Kolbenfläche einen Dosierraum begrenzt und in diesem reziprozierend derart bewegbar ist, dass er wechselweise Süßwarenmasse von der Massezuführöffnung in den Dosierraum saugt oder aus diesem zur Masseabgabeöffnung ausstößt,
- wenigstens einem Ventil, das zum dosierten Abgeben der Süßwarenmasse aus dem Dosierraum über die Masseabgabeöffnung in eine Offenstellung und eine Schließstellung schaltbar ist,
wobei Dosierkolben und Ventil dichtungslos mit Spiel an ihrer jeweiligen Mantelfläche geführt sind und während ihrer reziprozierenden Bewegungen mit ihren Mantelflächen zumindest abschnittsweise wiederholt in den Strom zugeführter Süßwarenmasse hineinbewegbar sind.

Erfindungsgemäß ist demnach vorgesehen, dass der Dosierkolben und das Ventil dichtungslos mit geringem Spiel in diesen zugeordneten Führungen aufgenommen sind. Dieses Spiel ist im Betrieb mit der verarbeiteten Süßwarenmasse gefüllt und derart bemessen, dass Rekristallisation bewirkende Scherkräfte in der Süßwarenmasse bei einer Bewegung von Kolben oder Ventil unterbunden sind. Eine solche Ausgestaltung der erfindungsgemäßen Vorrichtung ist gerade dann vorteilhaft, wenn die Vorrichtung zum Dosieren von zur Rekristallisation neigenden Süßwarenmassen, insbesondere übersättigten Zuckerlösungen zur Hartbonbonherstellung genutzt wird. Derartige Massen neigen nämlich zur Ausbildung von Keimkristallen im Bereich der Kolbenführungsflächen bei allzu großen Scherbelastungen und Reibungseffekten. Dies kann durch die vorstehend geschilderte Ausgestaltung vermieden werden. Darüber hinaus wird eine bessere Reinigungsfähigkeit der erfindungsgemäßen Vorrichtung dadurch erzielt, dass die Kolben und Ventile für die Reinigung aus ihren Zylindern nach oben herausgefahren werden können und allseits von der Reinigungsflüssigkeit umspült werden. Aus dem Stand der Technik bekannte dichtend geführte Dosierkolben und Ventile (Schieber) führen in zweierlei Hinsicht zur Rekristallisation. Zum einen durch die hohen Scherkräfte des engen Spalts zwischen Kolben bzw. Ventil und dem zugeordneten Zylinder und zum Anderen durch mangelnden Austausch der Süßwarenmasse durch frische Masse. Bei der erfindungsgemäßen dichtungsfreien Führung mit Spiel befindet sich hingegen rings um den Kolben oder das Ventil herum, genauer gesagt um deren Mantelfläche, dieselbe Süßwarenmasse, so dass keine Leckverluste entstehen können.

Gemäß einer Ausführungsvariante der Erfindung kann das Spiel in Abhängigkeit von der verarbeiteten Süßwarenmasse wählbar sein, vorzugsweise im Bereich zwischen 0,1 bis 1,0mm. Mit anderen Worten wird gemäß der Erfindung das Spiel produktabhängig eingestellt, beispielsweise durch Wahl von Dosierkolben oder Ventilelementen bzw. Ventilkörpern mit unterschiedlichen Durchmessern.

Das Ventil kann erfindungsgemäß als Hubventil derart ausgebildet sein, dass in einer Zwischenstellung sowohl der Ansaugkanal zum Kolben als auch der Auspresskanal zur Düse abgeschlossen sind. Für Reinigungszwecke kann das Ventil in eine Reinigungsposition gefahren werden, in der es von einer Reinigungsflüssigkeit ausreichend gut umspült werden kann.

Eine Weiterbildung der Erfindung sieht vor, dass das Ventil ein Dreh-Hubventil ist, das einen Ventilkörper aufweist, der durch eine Drehbewegung zwischen einer Offenstellung und einer Schließstellung verlagerbar ist, und der durch eine Hubbewegung zu Dosierzwecken oder Reinigungszwecken verlagerbar ist.

Erfindungsgemäß kann ferner vorgesehen sein, dass das Ventil dazu ausgebildet ist, am Ende eines Dosiervorgangs einen kurzen Rückhub auszuführen. Dies ist insbesondere für das Dosieren von Hartbonbonmassen erforderlich, wobei einer Fadenbildung entgegengewirkt werden muss. Durch den kurzen Rückhub wird die Hartbonbonmasse in die Düse zurückgesaugt.

Eine Ausführungsvariante der Erfindung sieht eine linear verlagerbare Düsenschiene mit wenigstens einer Masseabgabeöffnung vor. Dabei kann vorgesehen sein, dass die Düsenschiene auswechselbar ist. Durch diese Maßnahme wird die Reinigungsmöglichkeit der erfindungsgemäßen Vorrichtung verbessert. Darüber hinaus lassen sich unterschiedliche Düsenschienen mit unterschiedlicher Anzahl von Düsen für verschiedene Dosieraufgaben verwenden. Ist die Anzahl der Düsen kleiner als die der Kolben und Ventile, so werden die nicht in Betrieb befindlichen Kolben und Ventile deaktiviert.

Für die Herstellung von mehrfarbigen Produkten oder Produkten mit einer oder mehreren Füllungen können über getrennte Massezuführungen verschiedene Masseströme aus unterschiedlichen Massen zugeführt werden, wobei die Masseströme in den Düsen zusammengeführt werden.

Die Erfindung betrifft ferner ein Verfahren zum Dosieren von Süßwarenmassen mit einer Vorrichtung der vorstehend beschriebenen Art, umfassend die folgenden Schritte:
- kontinuierliches, vorzugsweise druckloses, Zuführen der Süßwarenmasse über die wenigstens eine Massezuführöffnung,
- reziprozierendes Bewegen des wenigstens einen Dosierkolbens in dem Dosierraum derart, dass er wechselweise Süßwarenmasse von der Massezuführöffnung in den Dosierraum saugt oder aus diesem zur Masseabgabeöffnung ausstößt, und
- dosiertes Abgeben der Süßwarenmasse aus dem Dosierraum über die Masseabgabeöffnung über das wenigstens eine Ventil, das bei einer Ausstoßbewegung des Dosierkolbens in seine Offenstellung und beim Ansaugen von Süßwarenmasse in seine Schließstellung geschaltet wird,
wobei der Dosierkolben und das Ventil dichtungslos mit Spiel an den jeweiligen Mantelflächen geführt wird und während ihren reziprozierenden Bewegungen mit ihren Mantelflächen zumindest abschnittsweise wiederholt in den Strom zugeführter Süßwarenmasse hineinbewegbar sind.

Ferner betrifft die Vorrichtung ein Verfahren zum Reinigen und/oder Sterilisieren der Vorrichtung der vorstehend beschriebenen Art mit den folgenden Schritten: Bewegen des Dosierkolbens aus dem diesen führenden Dosierkolbenzylinder heraus in einen Bereich eines mit der Massezuführöffnung verbundenen Massekanals, Bewegen des Ventilkörpers aus der Ventilführung heraus in einen Bereich des mit der Massezuführöffnung verbundenen Massekanals unter Freigabe der Masseabgabeöffnung, Zuführen eines Reinigungsmediums über die Massezuführöffnung und Spülen der Vorrichtung, Abführen des Reinigungsmediums über die Masseabgabeöffnung.

Durch die Erfindung wird es möglich, eine CIP-fähige (cleaning in process) sowie eine SIP-fähige (sterilization in process) Vorrichtung bereitzustellen. Mit anderen Worten muss die Vorrichtung nicht zum Reinigen bzw. zum Sterilisieren demontiert werden. Es reicht aus, wenn Kolben und Ventil in jeweils zugeordnete Reinigungsstellungen verlagert und anschließend die entsprechenden Reinigungsschritte durchgeführt werden.

Die Erfindung wird im Folgenden beispielhaft anhand der beiliegenden Figuren erläutert. Es stellen dar:
- Fig. 1: eine schematische Ansicht einer erfindungsgemäßen Vorrichtung beim Ansaugen von Masse in den Dosierraum.
- Fig. 2: eine Ansicht gemäß Fig. 1 beim Übergang zu einer Dosierstellung;
- Fig. 3: die Vorrichtung gemäß Fig. 1 und 2 beim Abgeben von Süßwarenmasse über die Masseabgabeöffnung;
- Fig. 4: die Vorrichtung am Ende des Dosiervorgangs, und
- Fig. 5: eine Ansicht der erfindungsgemäßen Vorrichtung während des Spülens.

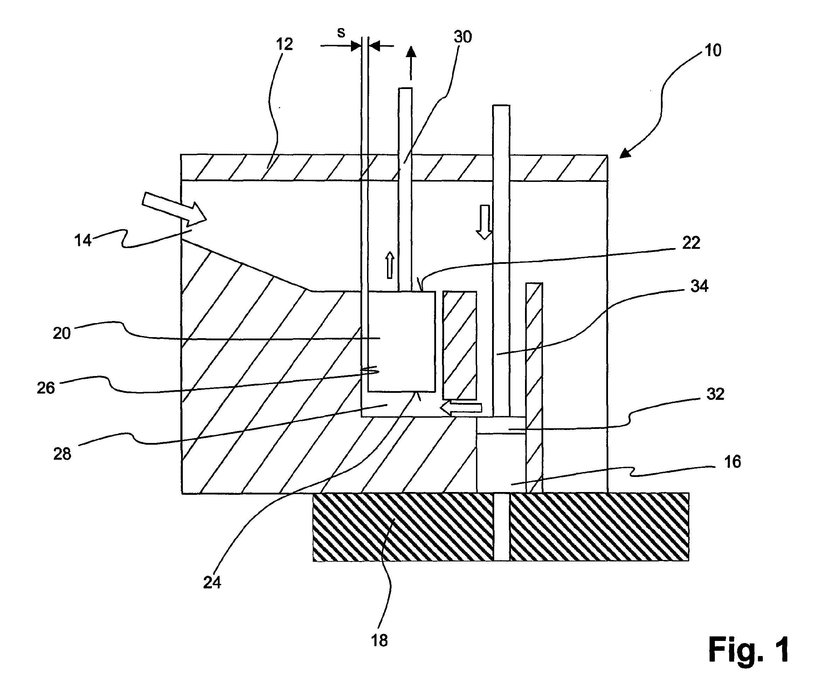

In Fig. 1 ist eine erfindungsgemäße Dosiervorrichtung schematisch dargestellt und allgemein mit 10 bezeichnet. Diese umfasst ein Gehäuse 12, das eine Massezuführöffnung 14 aufweist. Über die Massezuführöffnung wird Süßwarenmasse aus einem Vorratsbehälter drucklos zugeführt. Das Gehäuse 12 weist ferner eine Masseabgabeöffnung 16 auf, über die Süßwarenmasse abgeführt werden kann. An dem Gehäuse 12 ist eine linear verlagerbare Düsenschiene 18 angebracht.

In dem Gehäuse ist ein Dosierkolben 20 im Rahmen einer reziprozierenden Hubbewegung nach oben und nach unten verlagerbar. Der Dosierkolben 20 besitzt eine obere Kolbenfläche 22 und eine untere Kolbenfläche 24. Die obere Kolbenfläche 22 ist etwa halb so groß wie die untere Kolbenfläche 24. Der Dosierkolben 20 ist in einer zylindrischen Kolbenführung 26 mit einem umlaufenden Spiel s aufgenommen. Dieses Spiel s ist derart bemessen, dass darin dauerhaft verarbeitete Süßwarenmasse enthalten und nur geringer Scherbelastungen ausgesetzt ist. Die untere Kolbenfläche 24 begrenzt zusammen mit der Wand der zylindrischen Kolbenführung 26 einen Dosierraum 28.

Parallel zu dem Kolben 30 ist ein Ventil mit einem Ventilkörper 32 in der Masseabgabeöffnung 16 geführt. Der Ventilkörper 32 ist über einen Stößel 34 linear nach oben und nach unten verlagerbar sowie antreibbar.

Man erkennt in Fig. 1 die aktuellen Masseströme qualitativ mit fett eingezeichneten Pfeilen. Über die Massezuführöffnung 14 erfolgt ein im wesentlichen druckloser Massestrom aus dem Vorratsbehälter. Der Dosierkolben 20 wird in dieser Phase gerade entsprechend dem Bewegungspfeil am Stößel 30 nach oben verlagert. Aufgrund dieser Hubbewegung strömt ein Massestrom an dem Stößel 34 vorbei in den Dosierraum 28. Während der Hubbewegung des Dosierkolbens 20 kommt es zu keinen oder nur unwesentlichen Scherbelastungen auf die in dem Spiel s vorhandene zur Rekristallisation neigenden Süßwarenmasse, so dass sich dort keine Keimkristalle ausbilden. 20Das Ventil 32 verschließt die Masseabgabeöffnung 16.

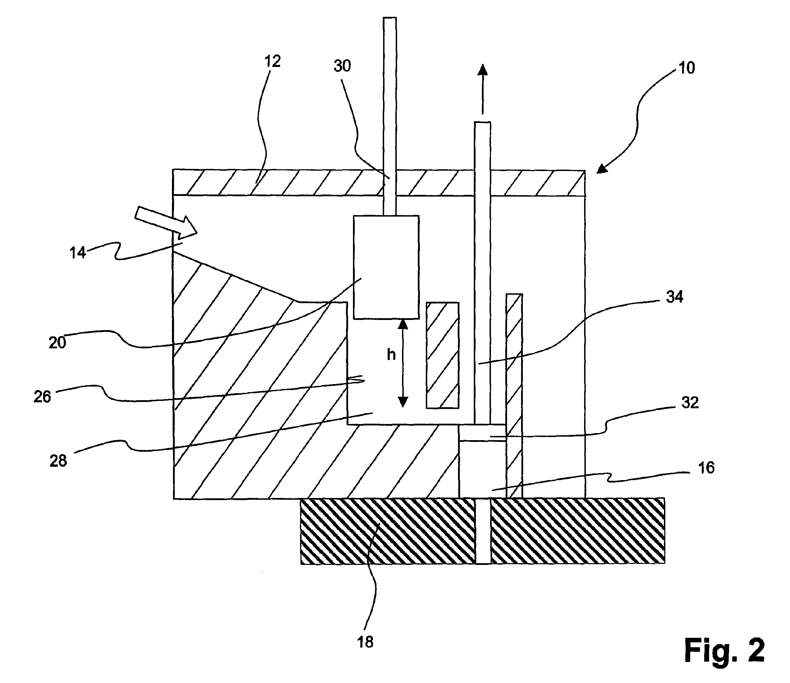

In dem in Fig. 2 gezeigten Zustand bleibt der Massezustrom über die Massezuführöffnung 14 unverändert. Allerdings befindet sich der Dosierkolben 20 in seiner während des Dosiervorgangs höchsten Stellung, in der er noch mit seinem unteren Abschnitt in der zylindrischen Kolbenführung 26 aufgenommen ist. Er hat den Kolbenhub h zurückgelegt. Der Dosierraum 28 ist nun vollständig mit Süßwarenmasse gefüllt. In diesem Zustand wird der Ventilkörper 32 nach oben verlagert. Die in Fig. 2 gezeigte Phase zeigt den Umsteuervorgang des Ventils von Ansaugen auf Auspressen und ist nur von kurzer Dauer.

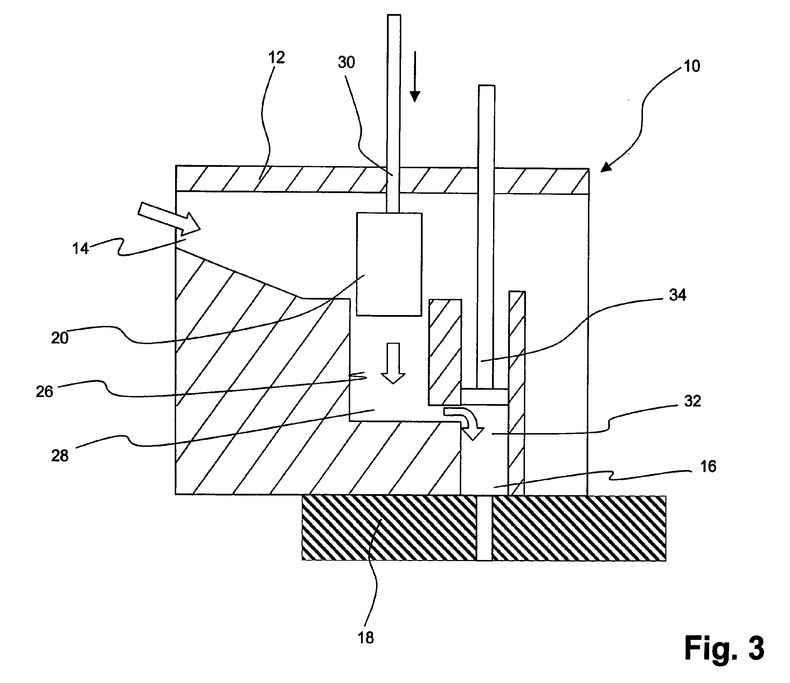

In Fig. 3 beginnt nun die Masseabgabephase. Der Dosierkolben 20 wird gemäß den Bewegungspfeilen nach unten verlagert. Dadurch wird Süßwarenmasse aus dem Dosierraum 28 über die Masseabgabeöffnung 16 ausgepresst, die von dem Ventilkörper 32 freigegeben wird. Die in dem Spiel s um den Dosierkolben 20 herum vorhandene Süßwarenmasse wirkt dabei dichtend. Die über den Dosierkolben 20 nach unten gedrückte Süßwarenmasse kann nun über eine Düse 40 in der Düsenschiene 18 abgegeben werden.

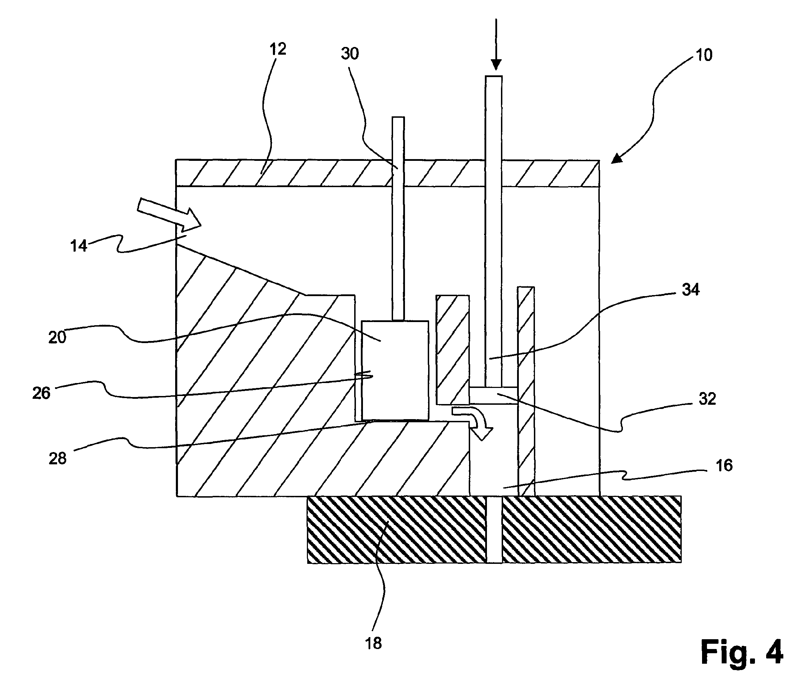

In der Darstellung gemäß Fig. 4 befindet sich der Dosierkolben 20 in seiner tiefsten Stellung. Der Dosierraum ist vollständig entleert.

Ist dieser Zustand erreicht, wird der Ventilkörper 32 wieder nach unten in die Masseabgabeöffnung verlagert. In der Folge wird der Dosierkolben 20, wie in Fig. 1 gezeigt, wieder angehoben, so dass der Dosierraum mit der zugeführten Masse gefüllt werden kann. Es beginnt derselbe Zyklus, wie vorstehend beschrieben.

Wesentlich ist dabei, dass der Dosierkolben 20 mit seiner Mantelfläche regelmäßig in den Strom zugeführter Süßwarenmasse im Zuführbereich 14 eintaucht und so von frischer Süßwarenmasse umspült wird. In der Folge taucht der Dosierkolben wieder in die zylindrische Führung 26 ein und nimmt dabei frische Süßwarenmasse in den Spalt s mit. Auch durch dieses regelmäßige Austauschen der in dem Spalt s vorhandene Süßwarenmasse, die während des Betriebs Dichtwirkung hat, lässt sich eine Ausbildung von Keimkristallen oder gar eine substantielle Rekristallisation der verarbeiteten Süßwarenmasse aufgrund der im Spalt s in geringem Maße auftretenden Scherkräfte vermeiden.

Gleiches geschieht mit dem Ventilkörper 32, der ebenfalls während des Umschaltvorgangs an seiner zylindrischen Mantelfläche mit frischer Masse umspült wird.

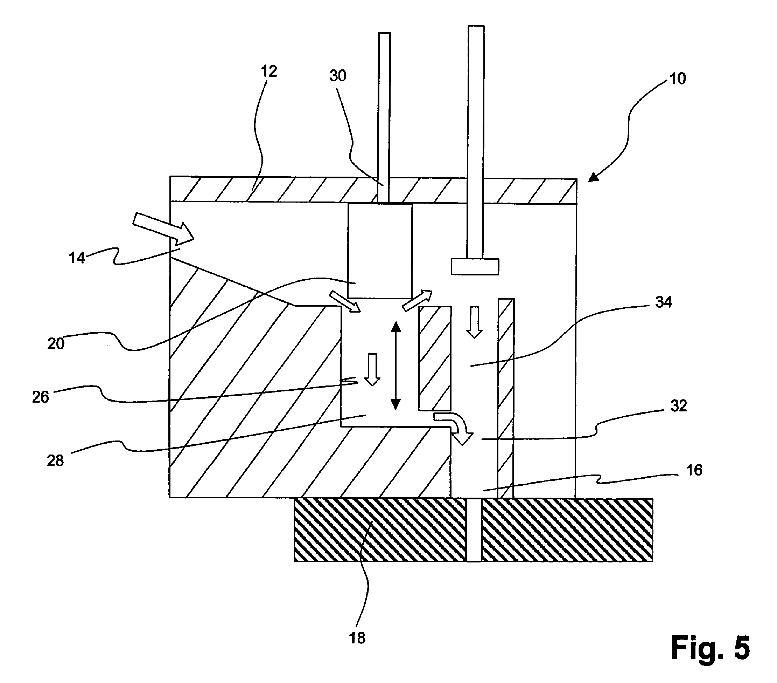

Man erkennt in den Figuren auch, dass sich die Erfindung verhältnismäßig leicht reinigen und sterilisieren lässt. Durch Hochfahren des Dosierkolbens 20 sowie des Ventilkörpers 32 in eine Stellung, in der beide Elemente frei in dem mit der Zuführöffnung 14 verbundenen Kanal sind, in Figur 5 gezeigt, lässt sich die Vorrichtung einfach mit Reinigungsmedium füllen und spülen, wobei alle Komponenten wirksam umspült werden, ohne dass eine Demontage der Vorrichtung erforderlich ist. Auch kann der Düsenschiene 18 entsprechend einfach gereinigt oder durch eine andersartige Düsenschiene ausgetauscht werden, etwa mit andersartiger Düseneinteilung oder Düsenanzahl.

## Patentansprüche

1. Vorrichtung (10) zum Dosieren von zu Rekristallisation neigender Süßwarenmassen mit
- wenigstens einer Massezuführöffnung (14) zum kontinuierlichen Zuführen der Süßwarenmasse,
- wenigstens einer Masseabgabeöffnung (16) zum dosierten Abgeben der Süßwarenmasse,
- wenigstens einem Dosierkolben (20), der mit seiner ersten Kolbenfläche (24) einen Dosierraum (28) begrenzt und in diesem reziprozierend derart bewegbar ist, dass er wechselweise Süßwarenmasse von der Massezuführöffnung (14) in den Dosierraum (28) saugt oder aus diesem zur Masseabgabeöffnung (16) ausstößt,
- wenigstens einem Ventil, das zum dosierten Abgeben der Süßwarenmasse aus dem Dosierraum über die Masseabgabeöffnung (16) in eine Offenstellung und eine Schließstellung schaltbar ist,
wobei der Dosierkolben (20) und das Ventil (32) dichtungslos mit Spiel an den jeweiligen Mantelflächen geführt sind und während der reziprozierenden Bewegung mit ihren Mantelflächen zumindest abschnittsweise wiederholt in den Strom zugeführter Süßwarenmasse hineinbewegbar sind.

2. Vorrichtung (10) nach Anspruch 1,
**dadurch gekennzeichnet, dass** das Spiel in Abhängigkeit von der verarbeiteten Süßwarenmasse wählbar ist, vorzugsweise zwischen 0,1 bis 1,0 mm liegt.

3. Vorrichtung nach Anspruch 1 oder 2,
**dadurch gekennzeichnet, dass** der Dosierkolben und das Ventil zu Reinigungszwecken derart positionierbar ist, dass seine gesamte Mantelfläche umströmbar ist.

4. Vorrichtung (10) nach einem der vorangehenden Ansprüche,
**dadurch gekennzeichnet, dass** das Ventil ein Dreh-Hubventil ist, das einen Ventilkörper (32) aufweist, der durch eine Drehbewegung zwischen einer Offenstellung und einer Schließstellung verlagerbar ist, und der durch eine Hubbewegung zu Dosierzwecken oder Reinigungszwecken verlagerbar ist.

5. Vorrichtung (10) nach einem der vorangehenden Ansprüche,
**dadurch gekennzeichnet, dass** das Ventil mit seinem Ventilkörper (32) dazu ausgebildet ist, am Ende eines Dosiervorgangs einen kurzen Rückhub auszuführen.

6. Vorrichtung (10) nach einem der vorangehenden Ansprüche,
**dadurch gekennzeichnet, dass** Dosierkolben und Ventile einzeln deaktivierbar sind.

7. Vorrichtung (10) nach einem der vorangehenden Ansprüche,
**gekennzeichnet durch** eine linear verlagerbare Düsenschiene (18) mit wenigstens einer Düse (40).

8. Vorrichtung (10) nach Anspruch 7,
**dadurch gekennzeichnet, dass** die Düsenschiene (18) auswechselbar ist.

9. Vorrichtung (10) nach einem der Ansprüche 1 bis 6,
**gekennzeichnet durch** getrennte Massezuführöffnungen für die Herstellung mehrfarbiger oder gefüllter Produkte.

10. Vorrichtung (10) nach Anspruch 9,
**dadurch gekennzeichnet, dass** die Dosierkolben und Ventile einzeln oder in Gruppen zusammengefasst angetrieben werden können.

11. Vorrichtung (10) nach einem der vorangehenden Ansprüchen,
**gekennzeichnet durch** eine Mehrzahl von in Serie geschalteten Dosierkolben und Ventilen.

12. Verfahren zum Dosieren von Süßwarenmassen mit einer Vorrichtung nach einem der Ansprüche 1 bis 11, umfassend die folgenden Schritte:
- kontinuierliches druckloses Zuführen der Süßwarenmasse über die wenigstens eine Massezuführöffnung,
- reziprozierendes Bewegen des wenigstens einen Dosierkolbens in dem Dosierraum derart, dass er wechselweise Süßwarenmasse von der Massezuführöffnung in den Dosierraum saugt oder aus diesem zur Masseabgabeöffnung ausstößt, und
- dosiertes Abgeben der Süßwarenmasse aus dem Dosierraum über die Masseabgabeöffnung über das wenigstens eine Ventil, das bei einer Ausstoßbewegung des Dosierkolbens in seine Offenstellung und beim Ansaugen von Süßwarenmasse in seine Schließstellung geschaltet wird,
wobei der Dosierkolben (20) und das Ventil (32) dichtungslos mit Spiel an den jeweiligen Mantelflächen geführt werden und während ihrer reziprozierenden Bewegungen mit den Mantelflächen zumindest abschnittsweise wiederholt in den Strom zugeführter Süßwarenmasse hineinbewegbar sind.

13. Verfahren zum Reinigen und/oder Sterilisieren der Vorrichtung nach einem der Ansprüche 1 bis 11, **gekennzeichnet durch** die folgenden Schritte:
- Bewegen des Dosierkolbens in einen Bereich eines mit der Massezuführöffnung verbundenen Massekanals,
- Bewegen des Ventilkörpers in einen Bereich des mit der Massezuführöffnung verbundenen Massekanals unter Freigabe der Masseabgabeöffnung,
- Zuführen eines Reinigungsmediums über die Massezuführöffnung und Spülen der Vorrichtung, wobei die gesamte Mantelfläche des Dosierkolbens von Reinigungsmedium umströmt wird, und
- Abführen des Reinigungsmediums über die Masseabgabeöffnung.
